# FASCICULE DE BREVET EUROPEEN

(11) **EP 2 910 747 B1**
(45) Date de publication et mention de la délivrance du brevet: **07.12.2016**
(21) Numéro de dépôt: 15151438.7
(22) Date de dépôt: 16.01.2015
(51) Int. Cl.: F01N 3/10, F01N 3/20, F01N 3/08, F01N 9/00, F01N 13/00

(54) **Système de gestion de diagnostics embarqués associé à une ligne d'échappement de gaz d'échappement d'un véhicule automobile**
Verwaltungssystem von On-Board-Diagnosesystemen, das mit einer Abgasleitung eines Kraftfahrzeugs verbunden ist
System for managing on-board diagnostics associated with an exhaust line for exhaust gases of a motor vehicle

(30) Priorité: 24.02.2014 FR 1451433
(43) Date de publication de la demande: 26.08.2015
(73) Titulaire: PEUGEOT CITROËN AUTOMOBILES SA, 78140 Vélizy-Villacoublay (FR)
(72) Inventeur: Crehan, Gabriel, 92420 Vaucresson (FR); Bizet, Charles, 94170 Le Perreux sur Marne (FR)

(56) Documents cités:
- EP-A1- 2 172 627
- DE-A1-102008 026 191
- FR-A1- 2 970 298

## Description

L'invention a trait au domaine de la dépollution des gaz d'échappement émis par un moteur à combustion interne, tel un moteur à combustion pauvre.

Plus particulièrement, l'invention se rapporte à un système et une méthode permettant de filtrer des diagnostics embarqués, relatifs aux organes de dépollution situés dans une ligne d'échappement de gaz. L'invention se rapporte en outre à un véhicule automobile équipé d'un tel système.

Un des enjeux majeurs de l'industrie automobile consiste à réduire toujours d'avantage les rejets dans l'atmosphère d'éléments polluants contenus dans les gaz d'échappement émis par les moteurs. A titre d'exemple, la combustion de carburant diesel, par un moteur à combustion pauvre, engendre l'émission de monoxyde de carbone, d'hydrocarbures, de particules de suie ou encore des oxydes d'azote désignés couramment par l'acronyme NOx.

Les niveaux d'émissions d'éléments polluants dans l'atmosphère sont de plus en plus réglementés. Afin de répondre aux exigences de la norme Euro 6 (applicable dès 2014), les constructeurs automobiles ont prévu des moyens de post-traitements spécifiques aux gaz d'échappement, notamment des organes de dépollution. A titre d'exemple, le document FR2970298 propose une ligne d'échappement de gaz d'échappement d'un moteur à combustion interne, comprenant les organes de dépollution suivants: un catalyseur d'oxydation DOC (acronyme anglais de « Diesel Oxydation Catalyst ») et un organe de réduction catalytique sélective SCR (acronyme anglais de « Selective Catalytic Reduction »). Le catalyseur d'oxydation DOC est placé en amont, selon le sens d'écoulement des gaz, du catalyseur de réduction sélective SCR, et comprend deux matériaux : un adsorbeur d'oxydes d'azote et un absorbeur d'oxydes d'azote.

D'une manière générale, l'utilisation d'un matériau adsorbeur d'oxydes d'azote ou PNA (acronyme anglais de « Passive NOx Adsorbeur »), permet de piéger les NOx en amont du SCR, c'est-à-dire de les adsorber à des températures froides, pour lesquelles le catalyseur de réduction sélective SCR n'est pas encore ou est faiblement actif. Au-delà d'une température seuil des gaz d'échappement (typiquement supérieure à 250 degrés Celsius), les NOx sont alors désorbés du PNA vers le catalyseur de réduction sélective SCR.

Le SCR se présente sous forme d'un filtre comprenant un revêtement catalytique poreux, et permet de réduire les NOx en diazote N₂ et eau H₂O, via une réaction chimique avec un agent réducteur, typiquement de l'ammoniac (NH₃). Cet agent réducteur peut être obtenu, à titre d'exemple, via l'injection d'urée de synthèse en solution aqueuse à 32.5%, par un injecteur disposé en amont du SCR dans la ligne d'échappement. La température seuil d'injection se situe généralement au dessus de 180°C, tout comme la température d'amorçage du SCR. Ainsi, lorsque la température de désorption des NOx du PNA vers le SCR est atteinte, le SCR est déjà supposé actif.

En outre, afin de pouvoir répondre aux exigences des normes de régulation européennes successives, les véhicules automobiles disposent depuis plusieurs années de systèmes électroniques de diagnostic embarqués OBD (acronyme anglais de « On-Board Diagnostic »). Ces systèmes OBD permettent de détecter les défauts et pannes liés aux organes de dépollution, en surveillant, à titre d'exemple, les données retournées par différentes sondes placées dans la ligne d'échappement: détecteurs de NOx, sondes de pressions, sondes de températures/thermocouples. En cas de détection/diagnostic d'un défaut ou panne sur un organe de dépollution, le système OBD doit alors en informer le conducteur via un moyen approprié, par exemple via une alerte visuelle, tel l'allumage d'un voyant lumineux sur le tableau de bord.

Certaines situations de conduites, telles des accélérations rapides d'un véhicule, peuvent entrainer une montée rapide en température des gaz d'échappement. Une brusque montée en température des gaz d'échappement, engendre une désorption des NOx piégés par le PNA en sortie du moteur vers le SCR. Une désorption rapide des NOx du PNA vers le SCR peut parfois entrainer un excès momentané de NOx en aval du SCR. Par excès de NOx en aval du SCR, on entend ici un taux de NOx en aval du SCR supérieur au taux de NOx en sortie du moteur. Cet excès de NOx survient généralement lorsque le SCR ne parvient momentanément pas à traiter simultanément la totalité des NOx, du fait de leur soudaine augmentation. Un tel excès momentané de NOx en aval du SCR, peut être alors détecté par une sonde puis interprété comme un non-fonctionnement du système SCR.

Ainsi, même si le SCR fonctionne, partant de cette interprétation, le système de diagnostic embarqué OBD peut par la suite déclencher une fausse-alerte à destination du conducteur, afin de lui notifier une panne ou un défaut de fonctionnement de l'organe SCR. Cette situation oblige alors le conducteur à retourner dans un garage, pour y faire remplacer son système de dépollution, qui fonctionne pourtant parfaitement. Ce problème potentiel majeur affecte donc directement le conducteur, aussi bien en termes de temps, de coûts, que de confiance vis à vis de son véhicule.

Par ailleurs, afin de limiter les émissions de NOx, le véhicule automobile peut comprendre un système de commande, capable de sélectionner différents modes de fonctionnements du moteur et/ou des organes de dépollution. Par exemple, une unité de commande peut choisir un mode de fonctionnement préalablement calibré par rapport à l'âge des organes de dépollution, ou vis-à-vis de valeurs seuil mesurées. Par exemple, la détection d'un taux élevé de NOx en aval du SCR, peut entrainer une re-calibration du moteur du véhicule par l'unité de commande selon un mode de fonctionnement particulier. La sélection d'un tel mode de fonctionnement permet alors la diminution des NOx dans la ligne d'échappement, mais entraine en contrepartie une consommation en carburant plus importante. Ainsi, une détection d'un excès momentané de NOx par l'OBD, peut aussi conduire à une surconsommation de carburant.

Du fait des raisons précédemment exposées, une meilleure considération des stratégies de diagnostics embarqués doit donc être envisagée.

L'invention proposée a pour but de remédier aux inconvénients précités.

Un objet de l'invention est de proposer une stratégie de diagnostic embarqué, permettant d'éviter l'envoi de fausses alertes à destination du conducteur d'un véhicule, lors d'une détection d'un excès momentané de NOx dans la ligne d'échappement.

Un autre objet de l'invention est d'éviter une surconsommation en carburant lors de la détection d'un excès momentané de NOx dans la ligne d'échappement.

Il est proposé, selon un premier aspect, un système de gestion de diagnostics embarqués associé à une ligne d'échappement de gaz d'échappement issus d'un moteur à combustion interne, la ligne d'échappement comprenant
- un catalyseur d'oxydation DOC comprenant un matériau adsorbeur d'oxydes d'azote ;
- un organe de réduction catalytique sélective SCR en aval du catalyseur d'oxydation selon le sens d'écoulement des gaz d'échappement dans la ligne d'échappement ;
ce système comprenant en outre
- un premier module configuré pour
   o faire correspondre au moins une valeur de température mesurée en un point de la ligne d'échappement à au moins un modèle ou une table de mesures préenregistré ;
   o estimer par comparaison avec au moins un modèle ou table de mesures correspondant, si la valeur de température mesurée se situe dans un intervalle de température pré-identifié, cet intervalle correspondant à un intervalle de température de désorption du matériau adsorbeur d'oxydes d'azote ;
- un deuxième module configuré pour désactiver un ou plusieurs diagnostics embarqués, lorsque la valeur de température déterminée en un point de la ligne d'échappement est estimée être dans l'intervalle de température pré-identifié.

Avantageusement, dans ce système, un des diagnostics embarqués désactivé a pour fonction de transmettre une information relative à un dysfonctionnement de l'organe de réduction catalytique sélective SCR.

Avantageusement, dans ce système, le premier module et le deuxième module sont compris dans un calculateur.

Avantageusement, dans ce système, l'intervalle de température pré-identifié est sélectionné en fonction de la température en amont de l'organe de réduction catalytique sélective SCR.

Selon un deuxième aspect, il est proposé un véhicule automobile comprenant un système de gestion de diagnostics embarqués tel que présenté ci-dessus.

Avantageusement, dans ce véhicule automobile, le moteur est un moteur partiellement ou totalement à combustion pauvre.

Selon un troisième aspect, il est proposé une méthode de gestion de diagnostics embarqués dans une ligne d'échappement de gaz d'échappement issus d'un moteur à combustion interne, la ligne d'échappement comprenant
- un catalyseur d'oxydation DOC comprenant un matériau adsorbeur d'oxydes d'azote ;
- un organe de réduction catalytique sélective SCR en aval du catalyseur d'oxydation, selon le sens d'écoulement des gaz d'échappement dans la ligne d'échappement ;
cette méthode comprenant les étapes suivantes :
- une étape de correspondance d'au moins une valeur de température mesurée en un point de la ligne d'échappement à au moins un modèle ou une table de mesures préenregistré ;
- une étape de comparaison de la valeur de température mesurée avec au moins un modèle ou table de mesures correspondant, permettant d'estimer si la valeur de température mesurée se situe dans un intervalle de température pré-identifié, cet intervalle correspondant à un intervalle de température de désorption du matériau adsorbeur d'oxydes d'azote ;
- une étape de désactivation d'un ou plusieurs diagnostics embarqués, lorsque la valeur de température déterminée en un point de la ligne d'échappement est estimée être dans l'intervalle de température pré-identifié.

Avantageusement, dans cette méthode, un des diagnostics embarqués désactivé a pour fonction de transmettre une information relative à un dysfonctionnement de l'organe de réduction catalytique sélective SCR.

Avantageusement, dans cette méthode, l'intervalle de température pré-identifié est sélectionné en fonction de la température en amont de l'organe de réduction catalytique sélective SCR.

Selon un quatrième aspect, il est proposé un produit programme d'ordinateur implémenté sur un support mémoire, susceptible d'être mis en oeuvre au sein d'une unité de traitement informatique et comprenant des instructions pour la mise en oeuvre de la méthode telle que présentée ci-dessus.

D'autres objets et avantages de l'invention apparaîtront à la lumière de la description de modes de réalisations, faite ci-après en référence aux dessins annexés dans lesquels :
- la figure 1 illustre une ligne d'échappement selon un mode de réalisation ;
- la figure 2 illustre les courbes associées à différents paramètres d'une ligne d'échappement, utilisables par un mode de réalisation ;
- la figure 3 illustre la sélection d'un intervalle de fonctionnement en température d'un filtre relatif à un système de diagnostic embarqué selon un mode de réalisation ;
- la figure 4 illustre une liste d'informations, mesurées ou estimées, permettant la mise en oeuvre de divers modes de réalisations.

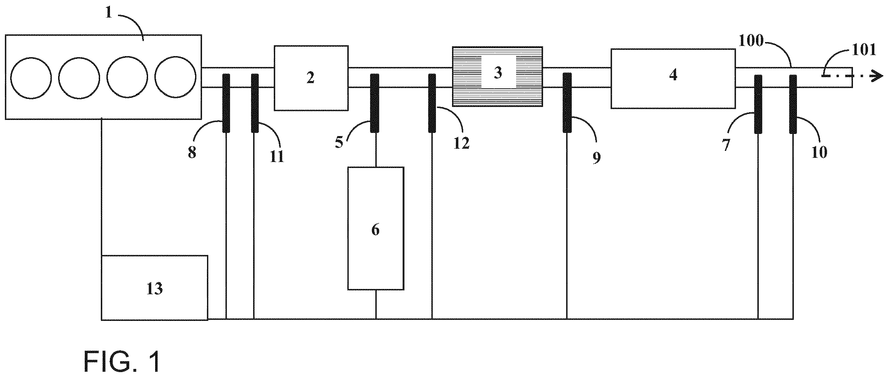

Sur la figure 1 est représentée une architecture de ligne **100** d'échappement des gaz d'échappement issus d'un moteur à combustion interne **1** selon un mode de réalisation.

La ligne **100** d'échappement est associée au moteur **1** à combustion interne et comprend plusieurs organes de dépollution **2, 3, 4** permettant de traiter les gaz d'échappement du moteur **1** pour en éliminer les polluants. Avantageusement, les organes de dépollution **2, 3, 4** sont disposés dans un ordre prédéterminé, selon le sens d'écoulement des gaz **101** dans la ligne d'échappement **100.**

Dans un mode de réalisation préféré, la ligne d'échappement **100** comprend au moins deux organes de dépollution **2,3** à savoir un catalyseur d'oxydation DOC **2** ou « catox » disposé en amont d'un organe de réduction catalytique sélective SCR **3,** selon le sens d'écoulement des gaz **101** dans la ligne d'échappement **100** des gaz.

A titre d'exemple, le DOC **2** est un monolithe extrudé de filtration, pouvant être réalisé à l'aide des oxydes suivants : Al₂O₃, TiO₂, ZrO₂, CeO₂, Y₂O₃, SiO₂ ainsi que leurs mélanges. Avantageusement, le DOC **2** comprend un matériau absorbeur de NOx PNA, permettant d'adsorber les NOx dans des phases froides de fonctionnement du moteur **1,** lorsque le SCR **3** n'est pas encore ou est faiblement actif.

A titre d'exemple, le PNA peut se présenter sous la forme d'un enduit appliqué sur le monolithe constituant le DOC **2.** Le matériau PNA, peut être choisi parmi des zéolites, des zéolites dopées par un métal, de préférence parmi les oxydes d'Al, Ce, Zr, Cu, Fe, Mn, Cu ou leur mélanges, des pérovskites, des argiles, des carbones et/ou oxydes. De même, d'autres matériaux tels que des oxydes de lanthanides, d'actinites ou leurs mélanges peuvent être utilisés. La présence de métaux précieux Au, Ag, Ir, Ru, Rh, Pt, Pd ainsi que leurs mélanges permet aussi d'augmenter les propriétés d'adsorption du DOC 2 à basse température. Par basse température, on entend ici toute condition liée au mode de combustion du moteur **1,** ne générant pas de température des gaz d'échappement dans la ligne d'échappement **100** suffisamment chaude pour permettre une désorption du NOx du PNA ou un amorçage de la catalyse dans le SCR **3.**

Dans un mode de réalisation, la ligne d'échappement **100** comprend un troisième organe de dépollution, tel qu'un filtre à particule FAP **4.** Le filtre à particule FAP **4,** peut se présenter sous la forme d'un pain monolithique, disposé en aval du SCR **3,** selon le sens d'écoulement des gaz **101** dans la ligne d'échappement **100.** Dans un autre mode de réalisation, le SCR **3** est intégré dans le FAP **4.** Alternativement, dans un autre mode de réalisation, le FAP **4** est placé entre le DOC **2** et le SCR **3,** c'est-à-dire en amont du SCR **3** selon le sens d'écoulement des gaz **101.**

En outre, la ligne d'échappement **100** peut aussi comprendre un injecteur **5** de réactif de réduction sélective, permettant la réduction des NOx dans le SCR **3.** L'injecteur **5** est placé en aval du DOC **2** et en amont du SCR **3,** selon le sens d'écoulement des gaz **101.** Le réactif de réduction sélective (ou son précurseur) peut être stocké dans un réservoir **6** avant son injection. A titre d'exemple, le réactif de réduction sélective est de l'ammoniac NH₃, obtenu par dissociation thermique d'un précurseur tel que de l'urée de synthèse en solution aqueuse à 32,5%, stocké dans un réservoir **6.** L'agent de réduction sélective injecté dans la ligne d'échappement **100,** peut aussi être choisi parmi les CO, les HC, les alcools, les glycols, les glycérols, les esters, les acides, la guanidine, les sels de guanidine ou l'hydrogène.

Selon un mode de réalisation, la quantité de réactif de réduction sélective présente dans le réservoir **6,** est contrôlée via une sonde (non représentée) placée au sein du réservoir **6.** Selon un autre mode de réalisation, cette quantité est déterminée en fonction d'un modèle ou d'une table de mesure préenregistré(e), fonction par exemple de la distance parcourue et/ou de la quantité de réactif injectée par l'injecteur **5.**

Selon divers modes de réalisations, l'injection du réactif de réduction sélective est effectuée en fonction
- de la quantité de réactif de réduction sélective (ou de son précurseur) présente dans le réservoir **6 ;**
- d'une température mesurée ou estimée en amont de l'injecteur **5.** A titre d'exemple, du NH₃ est injecté, si seulement une température mesurée en aval du DOC 2/en amont du SCR **3,** permet à la fois la dissociation de son précurseur et le fonctionnement du SCR **3 ;**
- de modèles ou tables de mesures, relatifs aux organes de dépollution, par exemple un modèle thermique de destruction des NOx par le SCR **3.**

Afin de contrôler les émissions de NOx, la ligne d'échappement **100** comprend avantageusement au moins une première sonde **7** NOx placée en aval du SCR **3,** selon le sens d'écoulement des gaz **101** dans la ligne d'échappement **100.** A titre d'exemple, la première sonde **7** NOx peut être disposée entre l'organe de réduction catalytique sélective SCR **3** et le FAP **4,** c'est-à-dire en amont du FAP **4,** ou encore disposée en aval du FAP **4** comme illustré sur la figure 1. En outre, la ligne d'échappement peut éventuellement comprendre une deuxième sonde **8** NOx disposée en amont du DOC **2,** permettant ainsi de mesurer les émissions de NOx en sortie du moteur **1** à combustion interne. Une troisième sonde NOx (non représentée) peut éventuellement être disposée en aval du DOC **2,** c'est à dire en amont du SCR **3,** afin d'évaluer l'efficacité d'adsorption du matériau PNA contenu dans le DOC **2.**

Divers capteurs/sondes peuvent être ajoutés dans la ligne d'échappement **100.** On peut citer à titre d'exemples:
- des sondes de pressions **9,10** respectivement disposées en amont et en aval du FAP **4,** permettant de contrôler la régénération du FAP **4** (typiquement assurée à l'aide d'un additif de carburant) ;
- des thermocouples **11,12** disposés respectivement
   o en aval du moteur **1** et en amont du DOC **2,** permettant de mesurer les températures des gaz d'échappement en sortie du moteur **1** et les comparer vis-à-vis de la température d'adsorption du matériau PNA ;
   o en aval du DOC **2** et en amont du SCR 3, permettant d'évaluer de comparer les températures mesurées des gaz d'échappement par rapport à la température de fonctionnement/d'amorçage du SCR **4.**

L'ensemble des paramètres de la ligne d'échappement **100,** par exemple les informations mesurées par les différentes sondes, sont avantageusement contrôlés par un calculateur **13** du véhicule automobile. Le calculateur **13** du véhicule automobile permet, notamment, de gérer la stratégie d'injection du réactif de réduction sélective, ainsi que les stratégies de diagnostics embarqués OBD. A titre d'exemple, la gestion d'une stratégie associée à un diagnostic embarqué spécifique, peut consister en l'activation/la désactivation dudit diagnostic, censé fournir par exemple une information relative à la température/la pression mesurée d'un organe dans la ligne d'échappement **100.**

Dans un mode de réalisation, les paramètres de la ligne d'échappement contrôlés par le calculateur **13** ne résultent pas nécessairement tous de mesures effectuées via les sondes précédemment décrites. A titre d'exemples, les émissions de NOx en sortie du moteur **1,** le stockage des NOx par le PNA formant le DOC 2, l'injection de réactif de réduction sélective, les températures/pressions des différents organes de dépollution ou points de la ligne d'échappement , peuvent être aussi estimés par rapport à des modèles ou des tables de mesures préalablement établis et enregistrés par un module embarqué dans le véhicule. Par exemple, une concentration de NOx dans un organe peut être déduite d'un modèle prédéfini en fonction d'une température relevée par un thermocouple en un point de la ligne d'échappement **100.** L'ensemble des données associées aux modèles et/ou tables de mesures, est préenregistré dans un module de stockage, qui peut communiquer avec le calculateur **13** ou être directement embarqué dans ce dernier.

Le calculateur **13** du véhicule automobile permet d'anticiper la détection d'un excès de NOx en aval du SCR **3,** via la gestion d'une stratégie relative aux diagnostics du système de diagnostic embarqué OBD. A titre d'exemple, la gestion d'une stratégie relative aux diagnostics embarqués peut être effectuée par le calculateur **13,** par un filtrage des fonctions OBD. Ce filtrage peut consister notamment:
- en la désactivation partielle du système de diagnostic embarqué OBD durant un intervalle de temps prédéterminé, par exemple
   o la prise en compte seulement de diagnostics spécifiques tels les températures, pressions d'un ou plusieurs organes de dépollution ;
   o l'arrêt d'un diagnostic et des mesures/évaluations correspondantes pour un organe spécifique, par exemple l'arrêt momentané des mesures de NOx relatives au SCR **3** ainsi que du diagnostic relatif au taux de NOx pour le SCR **3 ;**
   o le non-relai des alertes d'un diagnostic, par exemple le non-relai des alertes concernant le de taux de NOx du SCR **3,** tout en continuant à maintenir actif ce diagnostic, ainsi que ses mesures/évaluations correspondantes;
- en la désactivation totale du système de diagnostic embarqué OBD durant une durée prédéterminée.

Avantageusement, le filtrage des fonctions OBD est effectué en fonction de température(s) ou d'intervalle(s) de températures correspondants à un ou plusieurs pics de désorption de NOx par le PNA.

De manière générale, les températures ou intervalles de températures peuvent être
- mesurés en au moins un point de la ligne d'échappement **100** via un ou plusieurs thermocouples ;
- estimés, par exemple selon des modèles de températures préenregistrés, se rapportant à au moins un point de la ligne d'échappement **100.** L'utilisation de tels modèles peut nécessiter la connaissance d'autres mesures physiques à effectuer dans la ligne d'échappement **100** (ex : température et/ou pressions). On peut par exemple considérer un modèle thermique à une ou plusieurs dimensions (ex : temps, température, pression) de la ligne d'échappement **100** ou des gaz en sortie du moteur **1.**

Un point de mesure ou d'estimation de température(s) peut à titre d'exemple se rapporter à un point en amont, en aval, ou encore à l'intérieur un organe de dépollution.

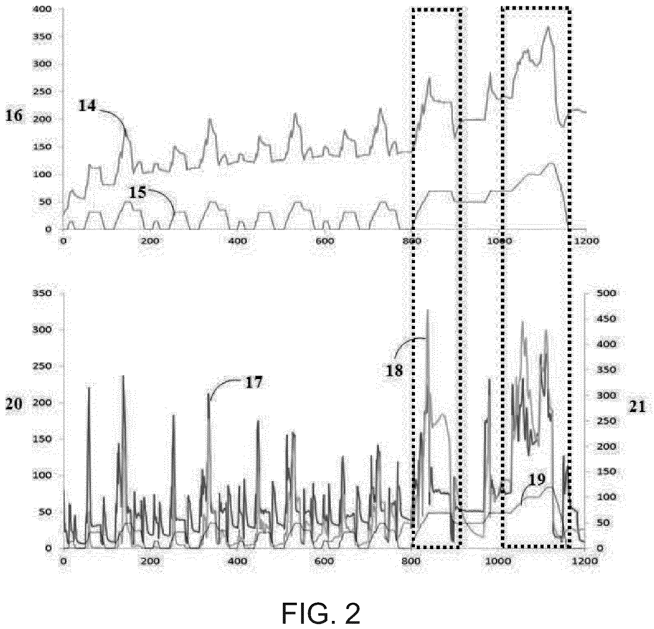

Un exemple de mise en oeuvre d'une stratégie de gestion de diagnostics embarqués va maintenant être décrit en se référant à la figure 2.

La courbe **14** présente en ordonnée **16,** la température mesurée en amont du DOC **2** (en °C) en fonction du temps, lors de l'application simultanée d'un cycle de conduite **15,** ici le nouveau cycle européen de conduite NEDC, acronyme anglais de « New European Driving Cycle ». La courbe **15** présente en ordonnée **16,** la vitesse en km/h en fonction du temps pour le cycle NEDC. Les températures et vitesses sont ici représentées pour une même échelle numérique sur l'axe **16.** L'axe des abscisses pour les courbes **14** et **15** est une échelle de temps commune en seconde.

Les courbes **17** et **18** illustrent respectivement l'évolution temporelle des taux (en ppm sur l'axe **20)** de NOx mesurés en amont du DOC **2** et en aval du SCR **3,** lors de l'application simultanée du même cycle de conduite NEDC **19** (en km/h axe **21).** L'axe des abscisses est commun aux courbes **17,18** et **19** et se rapporte à une échelle de temps en secondes.

Il est important de noter ici, que les axes des temps des courbes **14, 15, 17, 18, 19** sont synchronisés, car le même cycle de conduite **15, 19** NEDC est appliqué ici.

Comme expliqué précédemment, les NOx en sortie du moteur **1** à combustion interne, sont piégés, c'est-à-dire adsorbés par le PNA associé au DOC **2** dans des conditions froides de conduite, typiquement inférieures à 180°C. Lorsque la température des gaz d'échappement dans la ligne d'échappement **100** atteint une certaine température seuil, pouvant être déterminée/calculée en fonction de la composition chimique du PNA, les NOx sont désorbés du PNA vers le SCR **3** pour être neutralisés. Un excès momentané de NOx en aval du SCR **3** par rapport au taux de NOx en sortie du moteur **1** à combustion interne, peut être alors observé.

Un tel excès de NOx en aval du SCR **3** est visible sur la figure 2, en référence aux intervalles de temps représentés en pointillés. On observe par exemple durant l'intervalle de temps 800-920 secondes, un plus fort taux de NOx **18** en aval du SCR **2,** par rapport au taux de NOx **17** en amont du DOC **2** (c'est-à-dire en sortie du moteur **1).** Cet excès de NOx résulte de la montée rapide en température **14** en amont du DOC **2,** du fait de l'accélération imposée par le cycle de conduite NEDC **15, 19.** L'intervalle de température relatif à un excès de NOx, correspond, ici, à un intervalle compris entre 200 et 250°C. Une stratégie choisie par le calculateur **13** peut alors dans cette situation, consister à désactiver le système de diagnostic embarqué OBD pour cet intervalle de température, durant l'intervalle de temps correspondant (ici entre 800 et 920 secondes). Connaissant au préalable des intervalles de temps et/ou températures se rapportant à des excès de NOx, le calculateur 13 est donc capable de prendre la décision de désactiver ou non le système OBD, par exemple si une mesure de température en amont du DOC **2** retourne un résultat compris entre 200 et 250°C. Selon ce mode de réalisation, le calculateur **13** permet donc d'effectuer un « filtrage » en température du système de diagnostic embarqué OBD, c'est-à-dire d'un ou plusieurs diagnostics embarqués.

Avantageusement, basé sur une simple mesure ou estimation de la température en amont du DOC **2,** le calculateur **13** effectue un filtrage du système de diagnostic OBD. Par exemple, le calculateur **13** identifie si un intervalle de température mesuré se rapporte à un pic de désorption de NOx par le PNA, et par conséquent un excès momentané de NOx en aval du SCR **3.** De manière plus générale, le calculateur **13** est capable de faire correspondre un intervalle de température mesuré ou estimé, à un taux de NOx en aval du SCR **3** préalablement déterminé, et de prendre en conséquence une décision appropriée concernant la gestion d'une stratégie de diagnostic embarqué.

Dans un autre mode de réalisation, tout autre point dans la ligne d'échappement **100** se rapportant à une température peut être utilisé par le calculateur pour effectuer ce type de correspondance et/ou effectuer une fonction de filtrage du système de diagnostic embarqué OBD.

Selon différents modes de réalisation, cette correspondance est effectuée, par exemple, grâce à des modèles ou des tables de mesures préenregistrés dans un module de stockage associé ou communiquant avec le calculateur **13.** A titre d'exemples:
- les modèles sont estimés en fonction de la composition chimique et/ou de l'architecture des organes de dépollution. Par exemple, un modèle relatif à la concentration de NOx dans le PNA du DOC **2** peut être estimé en fonction de la température du PNA et de sa composition chimique ;
- les tables de mesures correspondent à des mesures temporelles de températures, pressions, ou taux de NOx, en un ou plusieurs points de la ligne d'échappement **100,** effectuées en fonction
   o par exemple de cycles de conduites, comme illustré en figure 2 ;
   o de paramètres tels que de l'âge, l'architecture, ou la composition chimique des organes de dépollution présents dans la ligne d'échappement **100.**

Selon divers autres modes de réalisation, les opérations décrites ci-dessus sont réalisées par des modules associés à un système de gestion des diagnostics embarqués. A titre d'exemple, le système de gestion des diagnostics peut comprendre les modules suivants:
- un module de stockage, comprenant un ensemble de modèles ou de tables de mesures (ex : températures, pressions, taux de NOx) relatifs aux différents organes de dépollutions **2, 3, 4 ;**
- un module comparateur, permettant d'établir une correspondance entre au moins une température déterminée (mesurée physiquement ou estimée selon un modèle) en un point de la ligne d'échappement **100,** et au moins une information préenregistrée dans le module de stockage (ex : modèle, table de mesure). A titre d'exemple, une mesure de température effectuée en amont du DOC **2** peut directement être reliée par ce module, à une table de mesure ou un modèle à une ou plusieurs dimensions (ex : taux de NOx en fonction des variables temps et température), et permet l'identification d'une situation correspondant à un pic de désorption de NOx durant un intervalle de temps prédéterminé. Dans un autre mode de réalisation, la mesure de température effectuée en amont du DOC **2,** permet au module comparateur d'associer la valeur de température mesurée à un modèle préenregistré dans le module de stockage, et en déduire ainsi les taux de NOx correspondants en sortie du moteur **1** selon ce modèle. On peut ainsi comparer par la suite les taux de NOx correspondants en sortie du moteur **1** avec des taux de NOx mesurés (ou estimés selon un modèle) en aval de l'organe de réduction catalytique sélective SCR **3,** pour en déduire une désorption éventuelle de NOx par le PNA. De manière générale, ce module comparateur est en mesure d'estimer par comparaison avec un modèle (ou une table de mesure), si une température mesurée appartient à un intervalle pré-identifié, pour lequel un excès momentané de NOx est connu, c'est-à-dire une situation prédéterminée selon un modèle pour laquelle le taux de NOx en sortie du moteur **1** à combustion interne est supérieur au taux de NOx en aval du SCR **3 ;**
- un module de commande permettant en fonction des résultats retournés par le module comparateur, de prendre une décision et effectuer en conséquence une action, vis-à-vis de la gestion du système de diagnostic embarqué OBD. A titre d'exemple, si le module comparateur fait correspondre à une mesure de température un taux de NOx estimé en amont du DOC **2,** et que le couple température/taux de NOx est reconnu selon un modèle comme correspondant à un excès de NOx en aval du SCR **3** durant un intervalle de temps connu, le module de commande peut alors prendre la décision de désactiver le système OBD, durant un intervalle de temps prédéterminé, censé correspondre à cet excès momentané de NOx. Dans un mode de réalisation, cet intervalle de temps peut être déterminé à l'avance par rapport à des mesures pré-effectuées. Par exemple, si l'on souhaite mettre à profits les mesures de la figure 2, une stratégie peut consister pour l'intervalle de température 200-250°C, correspondant à un pic de désorption de NOx du PNA, à désactiver le diagnostic relatif au taux de NOx durant un intervalle de temps 120 secondes, se rapportant ici au temps de désorption du PNA (intervalle de temps 800-920 secondes). Selon un autre mode de réalisation, l'intervalle temps pendant lequel une stratégie de désactivation (totale ou partielle) du système OBD est appliquée, peut être déterminé par rapport à un modèle préenregistré, par exemple basé sur un modèle de stockage de NOx par le PNA déterminé en fonction de sa température et de sa composition chimique.

Le module comparateur et le module de commande peuvent être réalisés via un ensemble d'instructions logicielles programmées sur support approprié tel un processeur.

Avantageusement, une partie ou l'ensemble des modules décrits ci-dessus sont hébergés par le calculateur **13.**

Par ailleurs, il est entendu que la détermination (ex : mesure, estimation) d'une température ou intervalle de température pour gérer le système de diagnostic OBD, ne se limite pas à déterminer la température en amont du DOC **2** ou plus généralement d'un unique point dans la ligne d'échappement **100.** Ainsi dans d'autres modes de réalisations, une pluralité de points de températures peuvent être considérés dans la ligne d'échappement **100,** par exemple : les températures en amont et en aval du DOC **2** et/ou du SCR **3,** ou encore les températures intra catalytiques des différents organes de dépollution par exemple celles du DOC **2** et du SCR **3.** La détermination de ces températures peut en outre être effectuée soit via des mesures physiques effectuées par exemple vie des thermocouples soit encore en fonction de modèles préétablis.

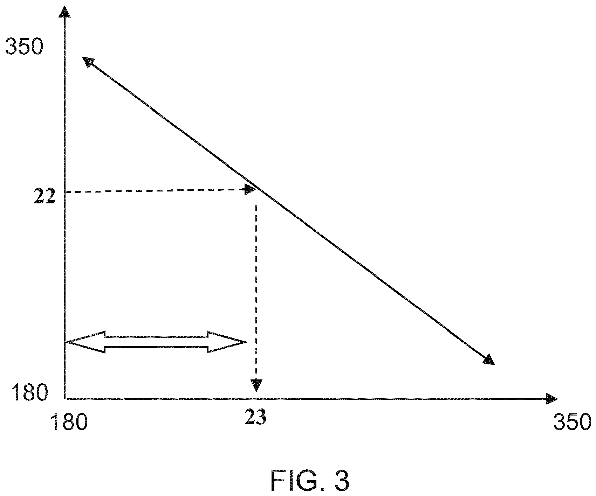

Dans un autre mode de réalisation, un intervalle de température prédéterminé permettant le filtrage du système OBD, peut aussi être sélectionné par le calculateur **13** (ou le module de commande), en fonction de la température du SCR **3.** Cette température, peut par exemple être mesurée en amont de celui-ci. La température du SCR **3** influe donc sur la plage de fonctionnement du filtre. En effet, plus la température du SCR **3** sera haute, plus les NOx seront traités rapidement par cet organe, limitant par conséquent le risque de relargage de NOx en aval du SCR **3.** La figure 3 illustre, à titre d'exemple, une relation pouvant exister entre la température mesurée en amont du SCR **3** (ordonnée **22** en °C) et la sélection d'un intervalle de mise en oeuvre du filtre (abscisse **23** en °C). Dans cet exemple, l'intervalle de température du filtre est sélectionné pour des températures inférieures à la température mesurée en amont du SCR 3. Ce type de modèle peut lui aussi être préenregistré dans un module de stockage.

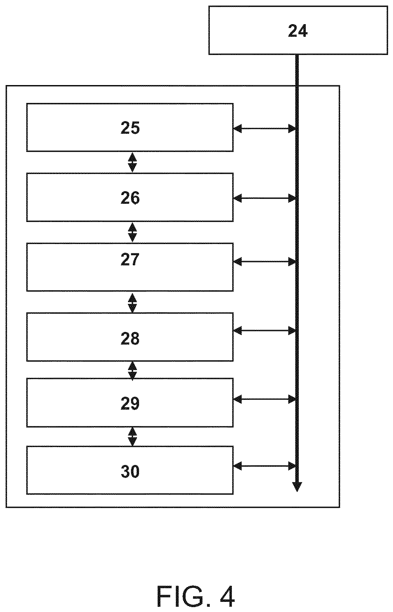

La figure 4 illustre une liste non-exhaustive d'informations mesurées ou estimées, permettant la mise en oeuvre d'une stratégie de filtrage des fonctions OBD, selon divers modes de réalisations. Les flèches bidirectionnelles représentent les dépendances entre ces informations. En référence à cette figure 4:
- divers paramètres automobiles **24** extérieurs à la ligne d'échappement **100** sont mesurés, tels la vitesse du véhicule et/ou la distance parcourues, et sont utilisés par différents modèles préenregistrés, par exemple les modèles:
   o permettant d'évaluer les taux de NOx en sortie moteur **1** ;
   o de stockage des NOx par le PNA ;
   o de destruction des NOx par les organes de dépollutions ;
   o d'injection et de contrôle du niveau de d'agent de réduction sélective dans le réservoir **6 ;**
   o permettant d'évaluer les températures dans la ligne d'échappement **100 ;**
- le taux de NOx en sortie moteur **25** est évalué par une sonde NOx, une table de mesure ou un modèle ;
- le stockage des NOx **26** par le PNA, est déterminé selon un modèle ou une table de mesures ;
- la consommation d'ammoniac NH₃ et un modèle de destruction des NOx **27** sont déterminés selon des modèles ou des tables de mesures ;
- l'injection du réactif de réduction sélective **28** est déterminée en fonction de sa quantité dans le réservoir **6 ;**
- les températures **29** des différents organes de dépollutions (DOC **2,** PNA, SCR **3)** sont déterminé selon des modèles, des tables de mesures ou encore des températures mesurées en amont, en aval de ces organes, voire directement en leur sein pour d'avantage de précision. La connaissance de température permet notamment de déterminer les seuils de désorption des NOx par le PNA ;
- une stratégie **30** de diagnostic embarqué filtrée en température, utilise les informations de NOx mesurées en aval du SCR **3** pour déterminer un éventuel dysfonctionnement du SCR **3 ;**
- l'ensemble des informations **24** à **30** sont retournées en direction d'un calculateur embarqué (flèche unidirectionnelle).

Avantageusement, le moteur **1** à combustion interne décrit dans les différents modes de réalisation, est un moteur partiellement ou totalement à combustion pauvre.

Avantageusement, la connaissance de la température de désorption du PNA permet d'anticiper les intervalles de temps comportant un excès de NOx momentané en aval du SCR **3.** Ainsi le filtrage en température du système de diagnostic embarqué OBD, permet de limiter l'émission de fausses alertes à destination du conducteur du véhicule automobile.

Avantageusement, le fait de limiter l'émission d'alarmes erronées concernant le taux de NOx, permet de limiter une potentielle nouvelle calibration du moteur, vers un mode émettant moins de NOx mais consommant d'avantage de carburant.

Avantageusement, l'utilisation d'un tel filtre en température permet de s'affranchir d'une sonde NOx en aval du DOC 2 (en amont du SCR 3), tout en garantissant un même niveau de confiance vis-à-vis du système de diagnostic embarqué OBD.

## Revendications

1. Système de gestion de diagnostics embarqués associé à une ligne d'échappement **(100)** de gaz d'échappement issus d'un moteur **(1)** à combustion interne, la ligne d'échappement **(100)** comprenant
- un catalyseur d'oxydation DOC **(2)** comprenant un matériau adsorbeur d'oxydes d'azote ;
- un organe de réduction catalytique sélective SCR **(3)** en aval du catalyseur d'oxydation **(2)** selon le sens d'écoulement des gaz d'échappement **(101)** dans la ligne d'échappement (**100**) ;
ce système étant **caractérisé en ce qu'**il comprend
- un premier module configuré pour
o faire correspondre au moins une valeur de température mesurée en un point de la ligne d'échappement **(100)** à au moins un modèle ou une table de mesures préenregistré ;
o estimer par comparaison avec au moins un modèle ou table de mesures correspondant, si la valeur de température mesurée se situe dans un intervalle de température pré-identifié, cet intervalle correspondant à un intervalle de température de désorption du matériau adsorbeur d'oxydes d'azote ;
- un deuxième module configuré pour désactiver un ou plusieurs diagnostics embarqués, lorsque la valeur de température déterminée en un point de la ligne d'échappement **(100)** est estimée être dans l'intervalle de température pré-identifié.

2. Système selon la revendication 1, dans lequel un des diagnostics embarqués désactivé a pour fonction de transmettre une information relative à un dysfonctionnement de l'organe de réduction catalytique sélective SCR **(3).**

3. Système selon les revendications 1 ou 2, dans lequel le premier module et le deuxième module sont compris dans un calculateur **(13).**

4. Système selon l'une quelconque des revendications 1 à 3, dans lequel l'intervalle de température pré-identifié est sélectionné en fonction de la température en amont de l'organe de réduction catalytique sélective SCR **(3).**

5. Véhicule automobile, **caractérisé en ce qu'**il comprend un système de gestion de diagnostics embarqués selon l'une quelconque des revendications 1 à 4.

6. Véhicule automobile selon la revendication 5, où le moteur **(1)** est un moteur partiellement ou totalement à combustion pauvre.

7. Méthode de gestion de diagnostics embarqués dans une ligne d'échappement **(100)** de gaz d'échappement issus d'un moteur **(1)** à combustion interne, la ligne d'échappement **(100)** comprenant :
- un catalyseur d'oxydation DOC **(2)** comprenant un matériau adsorbeur d'oxydes d'azote ;
- un organe de réduction catalytique sélective SCR **(3)** en aval du catalyseur d'oxydation **(2)** selon le sens d'écoulement des gaz d'échappement **(101)** dans la ligne d'échappement **(100)** ;cette méthode étant **caractérisée en ce qu'**elle comprend les étapes suivantes :
- une étape de correspondance d'au moins une valeur de température mesurée en un point de la ligne d'échappement **(100)** à au moins un modèle ou une table de mesures préenregistré ;
- une étape de comparaison de la valeur de température mesurée avec au moins un modèle ou table de mesures correspondant, permettant d'estimer si la valeur de température mesurée se situe dans un intervalle de température pré-identifié, cet intervalle correspondant à un intervalle de température de désorption du matériau adsorbeur d'oxydes d'azote ;
- une étape de désactivation d'un ou plusieurs diagnostics embarqués, lorsque la valeur de température déterminée en un point de la ligne d'échappement **(100)** est estimée être dans l'intervalle de température pré-identifié.

8. Méthode selon la revendication 7, dans laquelle un des diagnostics embarqués désactivé a pour fonction de transmettre une information relative à un dysfonctionnement de l'organe de réduction catalytique sélective SCR **(3).**

9. Méthode selon la revendication 8, comprenant une étape de sélection de l'intervalle de température pré-identifié en fonction de la température en amont de l'organe de réduction catalytique sélective SCR **(3).**

10. Produit programme d'ordinateur implémenté sur un support mémoire, susceptible d'être mis en oeuvre au sein d'une unité de traitement informatique et comprenant des instructions pour la mise en oeuvre de la méthode selon l'une quelconque des revendications 7 à 9.

## Patentansprüche

1. Verwaltungssystem für Onboard-Diagnosen, das mit einer Abgasleitung (100) von Abgasen, die aus einer Brennkraftmaschine (1) stammen, assoziiert ist, wobei die Abgasleitung (100) Folgendes umfasst
- einen Oxidationskatalysator DOC (2), der ein Stickstoffoxide adsorbierendes Material umfasst,
- ein Element zur selektiven katalytischen Reduktion SCR (3) stromabwärts des Oxidationskatalysators (2) entlang der Strömungsrichtung der Abgase (101) in der Abgasleitung (100),
System **dadurch gekennzeichnet, dass** es Folgendes umfasst:
- ein erstes Modul, das konfiguriert ist, um
• mindestens einen Temperaturwert, der an einer Stelle der Abgasleitung (100) gemessen wird, mit mindestens einem vorab gespeicherten Modell oder einer Messwerttabelle entsprechen zu lassen,
• durch Vergleich mit mindestens einem entsprechenden Modell oder einer entsprechenden Messwerttabelle zu schätzen, ob der gemessene Temperaturwert in einem vorab identifizierten Temperaturbereich liegt, wobei dieser Bereich einem Temperaturbereich der Desorption des Stickstoffoxide adsorbierenden Materials entspricht,
- ein zweites Modul, das konfiguriert ist, um eine oder mehrere Onboard-Diagnosen zu deaktivieren, wenn der an einer Stelle der Abgasleitung (100) bestimmte Temperaturwert als in dem vorab identifizierten Temperaturbereich befindlich geschätzt wird.

2. System nach Anspruch 1, wobei eine der deaktivierten Onboard-Diagnosen die Aufgabe hat, eine Information in Zusammenhang mit einer Funktionsstörung des Elements zur selektiven katalytischen Reduktion SCR (3) zu übertragen.

3. System nach den Ansprüchen 1 oder 2, wobei das erste Modul und das zweite Modul in einem Rechner (13) enthalten sind.

4. System nach einem der Ansprüche 1 bis 3, wobei der vorab definierte Temperaturbereich in Abhängigkeit von der Temperatur stromaufwärts des Elements zur selektiven katalytischen Reduktion SCR (3) ausgewählt ist.

5. Kraftfahrzeug, **dadurch gekennzeichnet, dass** es ein Verwaltungssystem für Onboard-Diagnosen nach einem der Ansprüche 1 bis 4 umfasst.

6. Kraftfahrzeug nach Anspruch 5, wobei die Brennkraftmaschine (1) eine Brennkraftmaschine mit teilweise oder vollständig magerer Verbrennung ist.

7. Verwaltungsverfahren für Onboard-Diagnosen in einer Abgasleitung (100) von Abgasen, die aus einer Brennkraftmaschine (1) stammen, wobei die Abgasleitung (100) Folgendes umfasst:
- einen Oxidationskatalysator DOC (2), der ein Stickstoffoxide adsorbierendes Material umfasst,
- ein Element zur selektiven katalytischen Reduktion SCR (3) stromabwärts des Oxidationskatalysators (2) entlang der Strömungsrichtung der Abgase (101) in der Abgasleitung (100),
Verfahren **dadurch gekennzeichnet, dass** es die folgenden Schritte umfasst:
- einen Entsprechungsschritt mindestens eines Temperaturwerts, der an einer Stelle der Abgasleitung (100) gemessen wird, mit mindestens einem vorab gespeicherten Modell oder einer Messwerttabelle,
- einen Vergleichsschritt des gemessenen Temperaturwerts mit mindestens einem entsprechenden Modell oder einer entsprechenden Messwerttabelle, der es erlaubt, zu schätzen, ob der gemessene Temperaturwert in einem vorab identifizierten Temperaturbereich liegt, wobei dieser Bereich einem Temperaturbereich der Desorption des Stickstoffoxide adsorbierenden Materials entspricht,
- einen Schritt des Deaktivierens einer oder mehrerer Onboard-Diagnosen, wenn der an einer Stelle der Abgasleitung (100) bestimmte Temperaturwert als in dem vorab definierten Temperaturbereich liegend geschätzt wird.

8. Verfahren nach Anspruch 7, wobei eine der deaktivierten Onboard-Diagnosen die Aufgabe hat, eine Information in Zusammenhang mit einer Funktionsstörung des Elements zur selektiven katalytischen Reduktion SCR (3) zu übertragen.

9. Verfahren nach Anspruch 8, das einen Schritt des Auswählens des vorab identifizierten Temperaturbereichs in Abhängigkeit von der Temperatur stromaufwärts des Elements zur selektiven katalytischen Reduktion SCR (3) umfasst.

10. Computerprogrammprodukt, das auf einem Speicherträger umgesetzt wird, das innerhalb einer Informatikverarbeitungseinheit umgesetzt werden kann und Anweisungen zur Umsetzung des Verfahrens nach einem der Ansprüche 7 bis 9 umfasst.

## Claims

1. A system for managing on-board diagnostics associated with an exhaust line (100) for exhaust gases issued from an internal combustion engine (1), the exhaust line (100) including
- an oxidation catalyst DOC (2) including an adsorbent material of nitrogen oxides;
- a selective catalytic reduction element SCR (3) downstream of the oxidation catalyst (2) according to the direction of flow of the exhaust gases (101) in the exhaust line (100);
this system being **characterized in that** it includes
- a first module configured to
∘ correlate at least one temperature value measured at a point of the exhaust line (100) with at least one model or a table of prerecorded measurements;
∘ estimate, by comparison with at least one model or table of corresponding measurements, whether the measured temperature value is situated in a pre-identified temperature interval, this interval corresponding to a temperature interval of desorption of the adsorbent material of nitrogen oxides;
- a second module configured to deactivate one or more on-board diagnostics, when the temperature value determined at a point of the exhaust line (100) is estimated to be in the pre-identified temperature interval.

2. The system according to claim 1, in which one of the deactivated on-board diagnostics has the function of transmitting information relating to a malfunction of the selective catalytic reduction element SCR (3).

3. The system according to claims 1 or 2, in which the first module and the second module are comprised in a computer (13).

4. The system according to any one of claims 1 to 3, in which the pre-identified temperature interval is selected as a function of the temperature upstream of the selective catalytic reduction element SCR (3).

5. A motor vehicle, **characterized in that** it includes a system for managing on-board diagnostics according to any one of claims 1 to 4.

6. The motor vehicle according to claim 5, in which the engine (1) is partially or totally a lean-burn engine.

7. A method for managing on-board diagnostics in an exhaust line (100) of exhaust gases issued from an internal combustion engine (1), the exhaust line (100) including:
- an oxidation catalyst DOC (2) including an adsorbing material of nitrogen oxides;
- a selective catalytic reduction element SCR (3) downstream of the oxidation catalyst (2) according to the direction of flow of the exhaust gases (101) in the exhaust line (100); this method being **characterized in that** it includes the following steps:
- a step of correspondence of at least one temperature value measured at a point of the exhaust line (100) with at least one model or a table of prerecorded measurements;
- a step of comparison of the measured temperature value with at least one model or table of corresponding measurements, permitting an estimation as to whether the measured temperature value is situated in a pre-identified temperature interval, this interval corresponding to a temperature interval of desorption of the adsorbing material of nitrogen oxides;
- a step of deactivation of one or more on-board diagnostics, when the determined temperature value at a point of the exhaust line (100) is estimated to be in the pre-identified temperature interval.

8. The method according to claim 7, in which one of the deactivated on-board diagnostics has the function of transmitting information relating to a malfunction of the selective catalytic reduction element SCR (3).

9. The method according to claim 8, including a step of selection of the pre-identified temperature interval as a function of the temperature upstream of the selective catalytic reduction element SCR (3).

10. A computer program product implemented on a memory device, able to be executed within a data processing unit and including instructions for executing the method according to any one of claims 7 to 9.
